Europäisches Patentamt

European Patent Office

Office européen des brevets

(11) Publication number: **0 259 519**
**A1**

## (12) EUROPEAN PATENT APPLICATION

(21) Application number: **86201534.4**

(22) Date of filing: **05.09.86**

(51) Int. Cl.⁴ **H02G 15/113**

(43) Date of publication of application:
**16.03.88 Bulletin 88/11**

(84) Designated Contracting States:
**AT CH DE FR GB IT LI NL SE**

(71) Applicant: **Chemische Industrie Filoform B.V.**
**Verlengde Hoogravenseweg 69c**
**NL-3525 BB Utrecht(NL)**

(72) Inventor: **Baars, Jan**
**Th. Eisenstraat 28**
**Montfoort(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **A junction box with shrinkage compensation.**

(57) A junction box for insulating a joint or joints
between the conductors of two or more cables by
means of a box compound. The junction box con-
sists of two portions to be provided around the cable
ends and defining a cavity between them, and are
interconnected by suitable means. According to the
invention the portion including the filling or pouring
hole is provided with a shrinkage compensation
space on opposite sides of said hole, as viewed in
longitudinal direction.

FIG 3

EP 0 259 519 A1

## A junction box with shrinkage compensation.

The present invention relates to a junction box for insulating a joint or joints between the conductors of two or more cables by means of a resinous composition, commonly referred to as a box compound, said junction box consisting of two portions to be provided around the cable ends and defining a cavity between them, there being provided at least one filling or pouring hole and means for interconnecting said portions.

A similar junction box disclosed in the laid-open Dutch patent application 7903993 has the drawback that, after filling the junction box, during the solidification of the box compound, cavities or blow holes may be produced in the material as a result of shrinkage, so that proper insulation is not always ensured.

It is an object of the present invention to eliminate this drawback.

To this end, the portion having the pouring hole, as viewed in longitudinal direction, is fitted with a shrinkage compensation space. When box compound is now poured into the junction box through the pouring hole, the compensation spaces will also be filled, at least partly, with liquid box compound. The liquid box compound contained in said spaces can be used as a supplement in the case of shrinkage of the material during hardening; so, there will always be sufficient material around the joint; no blow holes or other cavities will be formed.

Since the chance of blow holes will be greatest adjacent the ends of the junction box, the shrinkage compensation spaces are preferably provided at that location, i.e. in the form of a chamber standing proud of the surface of the box, said chamber having a vent hole. When filling the box, any air contained in the chamber can escape through said vent hole. When the box compound is hardening and shrinkage occurs, in particular in said region, box compound can be supplied from the chamber, thereby preventing the formation of cavities, so that the junction box proper continues to be properly filled.

Such a chamber is preferably provided with a prismatic outer wall and a transverse wall containing the vent hole, said outer wall, extending at least partly beyond said transverse wall adjacent said vent hole. This prevents the user's fingers from getting dirty.

When the portions defining the cavity taper towards the ends, the shrinkage compensation spaces may be provided at the location of said conical portions.

The shrinkage compensation spaces may be formed in such a manner that their cross sections increase towards the respective box end, without, however, said spaces extending up to the ends. The need for shrinkage-compensating resinous composition increases with the longitudinal distance to the heart of the box. Since the cross sections of the spaces increase likewise, the need for composition along the length of the box can thus be satisfied optimally.

In a further embodiment, where the portions of the junction box are fitted adjacent the interface with a plurality of tenon-and-mortise joints, the tenons, made of polypropylene, may have a length exceeding the thickness of the lugs. By loading the projecting tenon portions, after assembly of the two portions, these are deformed, thereby forming a locking arrangement.

The present invention further relates to a method of insulating a joint or joints between the conductors of two or more cables by means of a box compound, using a junction box as described hereinbefore, in which adjacent the box ends, around the cable ends, there is provided a resilient, air-pervious socket or the like, as a result of which the air from the box can escape through the socket during the filling of the box with box compound, while the viscous box compound is retained by the socket. This arrangement ensures that the box and in particular also the shrinkage compensation spaces may be well filled; moreover, the compound can be injected at a high pressure.

One embodiment of the junction box according to the present invention will now be described, by way of example, with reference to the accompanying drawings, in which:

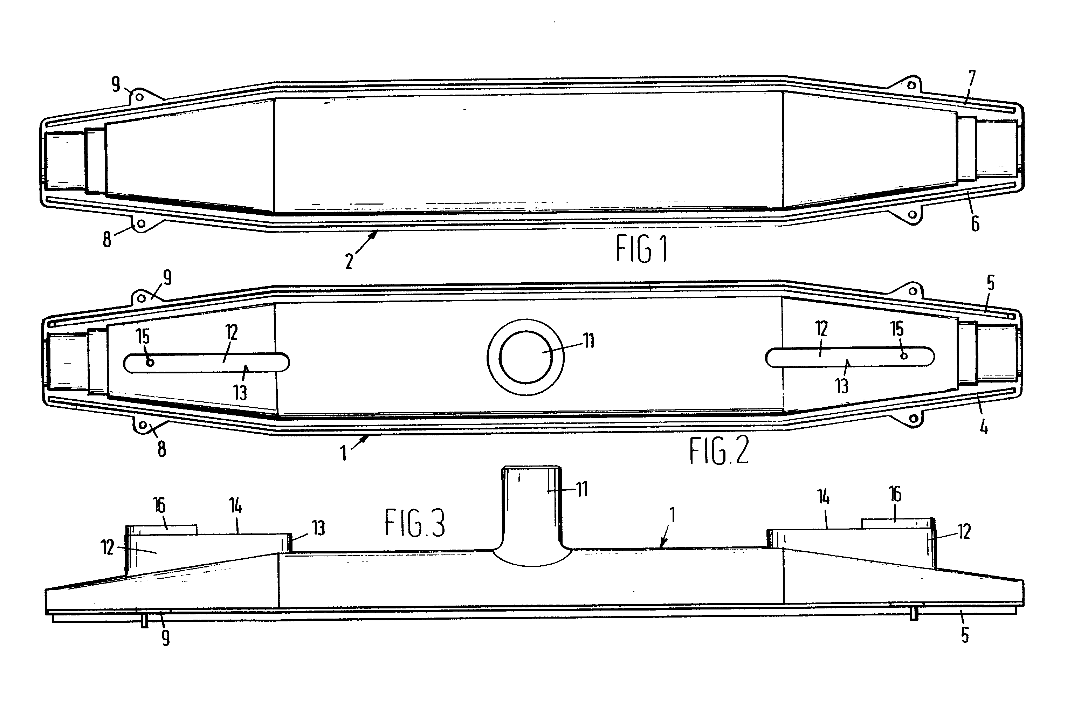

Fig. 1 is a top view of the lower part of a junction box;

Fig. 2 is a top view of the upper part of a junction box; and

Fig. 3 is a side view of the upper part shown in Fig. 2.

As shown in the drawings, a junction box consists of an upper part 1 and a lower part 2, which in mounted condition, together define a cavity. The upper part 1 has a tongue 4 and a groove 5, while the lower part has a tongue 6 and a groove 7. Moreover, the two parts have lugs 8, 9 fitted with tenons and mortises, not further indicated, for forming known per se tenon-and-mortise joints. The tenons of the polypropylene parts have such a length that, after the two parts have been clamped onto one another, the tenons project. By subsequently exerting a force on the projecting tenon portions, there is formed a "head", thereby interconnecting the two parts indissolubly.

The upper part has a connecting nipple 11, being slightly conical on its underside. There may be provided a cap, not shown, covering the connecting nipple and having a vent hole, so that no earth can fall into the nipple opening, but allowing on the other hand finish-filling from the conical nipple 11. The upper part 1 further includes two shrinkage compensation spaces 12 having a prismatic outer wall 13. Spaces 12 are provided adjacent the conical end portions of the upper part 1. Compensation spaces 12 are closed at their tops by a transverse wall 14 containing a vent hole 15. Adjacent vent hole 15 the wall surface 13 extends beyond transverse wall 14 forming an upright edge 16. The cross section of the compensation space 12 increases towards the box end. The inner walls of the box ends are cylindrical, so that resilient, air-pervious sockets disposed around the cable ends can be easily retained therein and the sockets cannot be pressed out under the pouring pressure.

It is observed that the shrinkage compensation spaces may not be too large, since otherwise the first hardening will occur therein, thereby rendering finish-filling from said spaces impossible.

It will be clear that many variations are possible without departing from the scope of the present invention and that the present invention is not restricted to the embodiment shown.

## Claims

1. A junction box for insulating a joint or joints between the conductors of two or more cables by means of a box compound, said box consisting of two portions to be provided around the cable ends and defining a cavity between them, there being provided at least one filling or pouring hole and means for interconnecting said portions, characterized in that the portion including the pouring hole is provided with a shrinkage compensation space on opposite sides of said pouring hole, as viewed in longitudinal direction.

2. A junction box according to claim 1, characterized in that each shrinkage compensation space is provided adjacent the box end in the form of a chamber standing proud of the surface of the box, said chamber having a vent hole.

3. A junction box according to claim 2, characterized in that the chamber is defined by a prismatic outer wall and a transverse wall containing the vent hole, said outer wall, at least partly adjacent said vent hole, extending to beyond the transverse wall.

4. A junction box according to claims 1, 2 or 3, wherein the parts defining the cavity tapers towards the ends, characterized in that said shrinkage compensation spaces are provided adjacent said conical parts.

5. A junction box according to claims 1 or 2, characterized in that the cross sections of the shrinkage compensation spaces increase towards the box ends but do not extend up to said ends.

6. A junction box according to any one of the preceding claims, wherein the parts of the junction box are provided adjacent the interface with a plurality of tenon-and-mortise joints, characterized in that the tenons, made of polypropylene, have a length exceeding the thickness of the lugs.

7. A method of insulating a joint or joints between the conductors of two or more cables by means of a box compound, using a box according to any one of the preceding claims, characterized by providing a resilient, air-pervious socket or the like at the box ends around the cable ends.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-2 244 432 (3M) <br> * Page 4, paragraph 3; figures 1-3 * | 1-4 | H 02 G 15/113 |
| A | FR-A-1 371 385 (TREFIMETAUX) <br> * Page 3, left-hand column, paragraphs 5,6; figures 1-6 * | 1,7 | |
| A | DE-C- 449 409 (AEG) <br> * Page 2, lines 37-53; figure * | 1 | |
| A,D | DE-A-3 019 169 (FILOFORM) <br> * Page 5, paragraph 1; figures 1-3 * & NL-A-7 903 993 | 1,6 | |
| | | | **TECHNICAL FIELDS SEARCHED (Int. Cl.4)** |
| | | | H 02 G |

The present search report has been drawn up for all claims

| Place of search | Date of completion of the search | Examiner |
|---|---|---|
| THE HAGUE | 06-05-1987 | LOMMEL A. |